# EUROPÄISCHE PATENTSCHRIFT

(11) **EP 4 330 024 B1**
(45) Veröffentlichungstag und Bekanntmachung des Hinweises auf die Patenterteilung: **12.02.2025**
(21) Anmeldenummer: 22722710.5
(22) Anmeldetag: 12.04.2022
(51) Int. Cl.: B29D 11/00

(54) **VERFAHREN UND HERSTELLUNGSVORRICHTUNG ZUM HERSTELLEN EINER OPHTHALMISCHEN LINSE**
METHOD AND PRODUCTION DEVICE FOR PRODUCING AN OPHTHALMIC LENS
PROCÉDÉ ET DISPOSITIF DE FABRICATION PERMETTANT DE FABRIQUER UNE LENTILLE OPHTALMIQUE

(30) Priorität: 27.04.2021 DE 102021110777
(43) Veröffentlichungstag der Anmeldung: 06.03.2024
(73) Patentinhaber: Carl Zeiss Meditec AG, 07745 Jena (DE)
(72) Erfinder: SCHREIBER, Benjamin, 10551 Berlin (DE); BADUR, Thorben, 10627 Berlin (DE)
(74) Vertreter: PATERIS Patentanwälte PartmbB
(86) Internationale Anmeldenummer: PCT/EP2022/059778
(87) Internationale Veröffentlichungsnummer: WO 2022/228891

(56) Entgegenhaltungen:
- US-A1- 2003 075 814
- US-A1- 2005 264 756
- US-A1- 2009 146 331

## Beschreibung

Die Erfindung betrifft ein Verfahren und eine Herstellungsvorrichtung zum Herstellen einer ophthalmischen Linse.

Unter einer ophthalmischen Linse wird eine Intraokularlinse verstanden, die dazu vorgesehen ist, eine natürliche Linse in einem Kapselsack eines Auges zu ersetzen. Herkömmlich wird die ophthalmische Linse durch Drehen aus einem Rohling hergestellt. Mittels des Drehens kann die ophthalmische Linse in verschiedenen Formen, wie beispielsweise sphärisch, asphärisch und torisch, und mit verschiedenen Brechkräften hergestellt werden. Jedoch kann mittels einer Drehmaschine immer nur eine ophthalmische Linse gleichzeitig hergestellt werden. Dadurch ist das Herstellen mittels des Drehens zeitaufwändig. Alternativ ist es möglich, die ophthalmische Linse mittels Gießen herzustellen. Dabei ist jedoch nachteilig, dass für jede Form und jede Brechkraft der ophthalmischen Linse eine eigene Gussform bereitgestellt werden muss.

DE 698 33 226 T2 offenbart ein Verfahren zur Herstellung einer optischen Linse mit einer Oberflächenmikrostruktur. DE 10 2012 020 363 A1 offenbart ein Verfahren zur Herstellung einer Linse, insbesondere eines Brillenglases, mit einer Mikrostruktur auf zumindest einer gekrümmten Linsenfläche.

US 2005/264756 A1 offenbart eine Vorrichtung gemäß dem Oberbegriff der Ansprüche 7, 8 und 9.

Aufgabe der Erfindung ist es daher, ein alternatives Verfahren und eine alternative Herstellungsvorrichtung zum Herstellen einer ophthalmischen Linse zu schaffen.

Das erfindungsgemäße Verfahren zum Herstellen einer ophthalmischen Linse weist die Schritte auf: a) Bereitstellen einer ersten Werkzeughälfte, die einen Stützkörper, der einen Innenraum und ein erstes Ende aufweist, in das eine Öffnung eingebracht ist, die mit dem Innenraum kommuniziert, und eine Folie aufweist, die direkt oder mittels mindestens einem Zwischenelement an dem ersten Ende angeordnet ist und die Öffnung abdeckt, und einer zweiten Werkzeughälfte; b) Bringen der ersten Werkzeughälfte und der zweiten Werkzeughälfte in einen Beabstandungszustand, in dem die erste Werkzeughälfte und die zweite Werkzeughälfte beabstandet voneinander angeordnet sind; c) Ändern der Krümmung der Folie; d) Aufbringen einer aushärtbaren Flüssigkeit auf die Folie; e) Bringen der ersten Werkzeughälfte und der zweiten Werkzeughälfte in einen Annäherungszustand, in dem die erste Werkzeughälfte und die zweite Werkzeughälfte zusammengebracht sind, so dass die Flüssigkeit sowohl von der ersten Werkzeughälfte als auch von der zweiten Werkzeughälfte begrenzt ist; f) Aushärten der Flüssigkeit, wodurch die Linse hergestellt wird.

Die erfindungsgemäße Herstellungsvorrichtung für die Herstellung einer ophthalmischen Linse weist eine erste Werkzeughälfte, die einen Stützkörper, der einen Innenraum und ein erstes Ende aufweist, in das eine Öffnung eingebracht ist, die mit dem Innenraum kommuniziert, und eine Folie aufweist, die direkt oder mittels mindestens einem Zwischenelement an dem ersten Ende angeordnet ist und die Öffnung abdeckt, eine zweite Werkzeughälfte und eine Krümmungseinrichtung auf, die eingerichtet ist, die Krümmung der Folie zu ändern, wobei die erste Werkzeughälfte und die zweite Werkzeughälfte eingerichtet sind, in einen Beabstandungszustand, in dem die erste Werkzeughälfte und die zweite Werkzeughälfte beabstandet voneinander angeordnet sind, und in einen Annäherungszustand gebracht zu werden, in dem die erste Werkzeughälfte und die zweite Werkzeughälfte zusammengebracht sind und in dem die erste Werkzeughälfte und die zweite Werkzeughälfte einen Hohlraum begrenzen, der die Form der Linse hat und in dem eine aushärtbare Flüssigkeit einbringbar ist, die nach ihrem Aushärten die Linse bildet.

Durch ein Wählen, wie stark die Folie gekrümmt wird, ist es nun einfach möglich, die Brechkraft der Linse einzustellen.

Dadurch ist es nicht erforderlich, für verschiedene Brechkräfte der Linse verschiedene erste Werkzeughälften bereitzustellen. Mit dem erfindungsgemäßen Verfahren ist ein zu dem herkömmlichen Drehverfahren und dem herkömmlichen Gießverfahren, bei dem eine starre Gießform verwendet wird, alternatives Verfahren geschaffen. Analog ist mit der erfindungsgemäßen Herstellungsvorrichtung eine zu der herkömmlichen Drehmaschine und der herkömmlichen Gießvorrichtung, bei der eine starre Gießform verwendet wird, alternative Herstellungsvorrichtung geschaffen. Es ist mit dem erfindungsgemäßen Verfahren und der erfindungsgemäßen Herstellungsvorrichtung möglich, die Linse mit einer sphärischen Form, einer asphärischen Form oder einer torischen Form herzustellen, wobei die Oberfläche glatt oder mit diffraktiven Strukturen versehen sein kann.

Es ist erfindungsgemäß, dass die Folie dielektrisch ist und in Schritt c) die Krümmung geändert wird, indem die Folie mit einem elektrischen Feld beaufschlagt wird. Mittels der Stärke des elektrischen Feldes lässt sich die Brechkraft der Linse besonders einfach einstellen.

Die erste Werkzeughälfte weist bevorzugt eine Mehrzahl an kreissektorförmigen Elektroden, die auf die Folie aufgebracht sind, und einen Gegenpol auf, der in der Mitte zwischen den kreissektorförmigen Elektroden vorgesehen ist, wobei in Schritt c) das elektrische Feld erzeugt wird, indem eine Spannungsdifferenz zwischen jedem der kreissektorförmigen Elektroden und dem Gegenpol angelegt wird. Dabei ist besonders bevorzugt, dass die kreissektorförmigen Elektroden eine erste Gruppe der Elektroden und eine zweite Gruppe der Elektroden aufweisen, wobei in Schritt c) die erste Gruppe mit einer ersten Spannung beaufschlagt wird und die zweite Gruppe mit einer zweiten Spannung beaufschlagt wird, die verschieden von der ersten Spannung ist. Dadurch kann die Linse mit einer torischen Form hergestellt werden.

Alternativ ist es erfindungsgemäß, dass die Folie paramagnetisch, diamagnetisch und/oder ferromagnetisch ist und in Schritt c) die Krümmung geändert wird, indem die Folie mit einem Magnetfeld beaufschlagt wird. Mittels der Stärke des Magnetfeldes lässt sich die Brechkraft der Linse besonders einfach einstellen. Dabei ist besonders bevorzugt, dass in Schritt c) die Folie mit einem in Radialrichtung bezüglich der optischen Achse der Linse und/oder in Umfangsrichtung bezüglich der optischen Achse der Linse variierendem Magnetfeld beaufschlagt wird. Mittels des in der Radialrichtung variierenden Magnetfeldes und gleichmäßig in der Folie verteilter paramagnetischer, diamagnetischer und/oder ferromagnetischer Partikel ist es beispielsweise möglich, die Linse mit einer sphärischen Form herzustellen. Mittels des in der Umfangsrichtung variierenden Magnetfeldes und gleichmäßig in der Folie verteilter paramagnetischer, diamagnetischer und/oder ferromagnetischer Partikel ist es beispielsweise möglich, die Linse mit einer torischen Form herzustellen.

Alternativ ist es erfindungsgemäß, dass die Folie ein Bimetall oder ein Polymer-Komposit aufweist und in Schritt c) die Krümmung geändert wird, indem die Temperatur der Folie erhöht oder erniedrigt wird. Durch die Wahl der Temperatur in dem Schritt c) lässt sich die Brechkraft der Linse einfach einstellen. Es ist besonders bevorzugt, dass die Folie ein weiteres Bimetall oder ein weiteres Polymer-Komposit aufweist, dessen Differenz der Wärmeausdehnungskoeffizienten verschieden von der Differenz der Wärmeausdehnungskoeffizienten des Bimetalls oder des Polymer-Komposit ist, das Bimetall oder das Polymer-Komposit eine erste Vorzugsrichtung hat und das weitere Bimetall oder das weitere Polymer-Komposit eine zweite Vorzugsrichtung hat, wobei die erste Vorzugsrichtung parallel zu einer Zylinderachse der Linse angeordnet ist und die zweite Vorzugsrichtung senkrecht zu der Zylinderachse angeordnet ist, so dass die Linse mit einer torischen Form hergestellt wird. Das Bimetall und das weitere Bimetall oder das Polymer-Komposit und das weitere Polymer-Komposit haben in einer Ebene, deren Normale senkrecht zu der optischen Achse der Linse angeordnet ist, eine von einer Quadratform abweichende Form, wobei die erste Vorzugsrichtung die längste in der Ebene angeordnete Erstreckung des Bimetalls oder des Polymer-Komposits ist und die zweite Vorzugsrichtung die längste in der Ebene angeordnete Erstreckung des weiteren Bimetalls oder des Polymer-Komposits ist.

Gemäß einer nicht zur Erfindung gehörenden Ausführungsform dichtet die Folie den Innenraum gasdicht von der dem Innenraum abgewandten Seite der Folie ab und in Schritt c) wird die Krümmung geändert, indem der Druck in dem Innenraum verschieden eingestellt wird von dem Druck auf der dem Innenraum abgewandten Seite der Folie. Mittels der Höhe der Druckdifferenz lässt sich die Brechkraft der Linse besonders einfach einstellen. Es ist besonders bevorzugt, dass die Dicke der Folie in Radialrichtung bezüglich der optischen Achse der Linse und/oder in Umfangsrichtung bezüglich der optischen Achse der Linse variiert.

Das Verfahren weist bevorzugt nach dem Schritt f) den Schritt auf: g) Ändern der Krümmung der Folie. Dadurch wird es einfacher, die Linse aus der ersten Werkzeughälfte zu entfernen. Die Krümmung der Folie kann in Schritt g) erhöht werden oder erniedrigt werden.

Bevorzugt wird die Krümmung der Folie in dem Schritt d) höher als in Schritt f) gewählt. Dadurch können mögliche Einschlüsse von Luft zwischen der ersten Werkzeughälfte und der zweiten Werkzeughälfte vor dem Aushärten der Flüssigkeit entfernt werden.

Es ist bevorzugt, dass in Schritt f) die Flüssigkeit, die mit einem thermischen Initiator versehen ist, erwärmt wird, um die Flüssigkeit auszuhärten. Alternativ ist es bevorzugt, dass in Schritt f) die Flüssigkeit, die mit einem photochemischen Initiator versehen ist, mit elektromagnetischer Strahlung beaufschlagt wird, um die Flüssigkeit auszuhärten. Alternativ ist es bevorzugt, dass in Schritt f) die Flüssigkeit, die mit einem Katalysator versehen ist, so lange in der Form behalten wird, bis ein zum Aushärten erwünschter Polymerisationsgrad erreicht wird.

Die zweite Werkzeughälfte weist bevorzugt einen weiteren Stützkörper, der einen Innenraum und ein erstes Ende aufweist, in das eine Öffnung eingebracht ist, die mit dem Innenraum kommuniziert, und eine weitere Folie auf, die direkt oder mittels mindestens einem Zwischenelement an dem ersten Ende angeordnet ist und die Öffnung abdeckt, wobei in Schritt c) auch die weitere Folie gekrümmt wird. Dadurch kann die Krümmung von zwei Flächen der Linse variabel eingestellt werden.

Die Folie ist erfindungsgemäß dielektrisch und die Krümmungseinrichtung ist erfindungsgemäß eingerichtet, die Folie mit einem elektrischen Feld zu beaufschlagen. Dabei ist besonders bevorzugt, dass die erste Werkzeughälfte eine Mehrzahl an kreissektorförmigen Elektroden, die auf die Folie aufgebracht sind, und einen Gegenpol aufweist, der in der Mitte zwischen den kreissektorförmigen Elektroden vorgesehen ist, wobei die Krümmungseinrichtung eingerichtet ist, eine Spannungsdifferenz zwischen jedem der kreissektorförmigen Elektroden und dem Gegenpol anzulegen. Die kreissektorförmigen Elektroden weisen ganz besonders bevorzugt eine erste Gruppe der Elektroden und eine zweite Gruppe der Elektroden auf, wobei die Krümmungseinrichtung eingerichtet ist, die erste Gruppe mit einer ersten Spannung zu beaufschlagen und die zweite Gruppe mit einer zweiten Spannung zu beaufschlagen, die verschieden von der ersten Spannung ist.

Es ist alternativ erfindungsgemäß, dass die Folie paramagnetisch, diamagnetisch und/oder ferromagnetisch ist und die Krümmungseinrichtung eingerichtet ist, die Folie mit einem Magnetfeld zu beaufschlagen. Die Krümmungseinrichtung ist besonders bevorzugt eingerichtet, in Schritt c) die Folie mit einem in Radialrichtung bezüglich der optischen Achse der Linse und/oder in Umfangsrichtung bezüglich der optischen Achse der Linse variierendem Magnetfeld zu beaufschlagen. Die Folie kann paramagnetische, diamagnetische und/oder ferromagnetische Partikel aufweisen, die gleichmäßig in der Folie verteilt sind. Alternativ dazu kann die Folie Metallstreifen aufweisen.

Alternativ ist es erfindungsgemäß, dass die Folie ein Bimetall oder ein Polymer-Komposit aufweist, und die Krümmungseinrichtung eingerichtet ist, die Temperatur der Folie zu erhöhen und/oder zu erniedrigen. Es ist besonders bevorzugt, dass die Folie ein weiteres Bimetall oder ein weiteres Polymer-Komposit aufweist, dessen Differenz der Wärmeausdehnungskoeffizienten verschieden von der Differenz der Wärmeausdehnungskoeffizienten des weiteren Bimetalls oder des weiteren Polymer-Komposits ist, das Bimetall oder das Polymer-Komposit eine erste Vorzugsrichtung hat und das weitere Bimetall oder das weitere Polymer-Komposit eine zweite Vorzugsrichtung hat, wobei die erste Vorzugsrichtung parallel zu einer Zylinderachse der Linse und die zweite Vorzugsrichtung senkrecht zu der Zylinderachse angeordnet sind, so dass die Linse mit einer torischen Form hergestellt wird. Das Bimetall und das weitere Bimetall oder das Polymer-Komposit oder das weitere Polymer-Komposit haben in einer Ebene, deren Normale senkrecht zu der optischen Achse der Linse angeordnet ist, eine von einer Quadratform abweichende Form, wobei die erste Vorzugsrichtung die längste in der Ebene angeordnete Erstreckung des Bimetalls oder des Polymer-Komposits ist und die zweite Vorzugsrichtung die längste in der Ebene angeordnete Erstreckung des weiteren Bimetalls oder des weiteren Polymer-Komposits ist.

Gemäß einer nicht zur Erfindung gehörenden Ausführungsform dichtet die Folie den Innenraum gasdicht von der dem Innenraum abgewandten Seite der Folie ab und die Krümmungseinrichtung ist eingerichtet, den Druck in dem Innenraum verschieden von dem Druck auf der dem Innenraum abgewandten Seite der Folie einzustellen. Es ist besonders bevorzugt, dass die Dicke der Folie in Radialrichtung bezüglich der optischen Achse der Linse und/oder in Umfangsrichtung bezüglich der optischen Achse der Linse variiert.

Die zweite Werkzeughälfte weist bevorzugt einen weiteren Stützkörper, der einen Innenraum und ein erstes Ende aufweist, in das eine Öffnung eingebracht ist, die mit dem Innenraum kommuniziert, und eine weitere Folie auf, die direkt oder mittels mindestens einem Zwischenelement an dem ersten Ende angeordnet ist und die Öffnung abdeckt, wobei die Krümmungseinrichtung auch eingerichtet ist, die weitere Folie zu krümmen.

Es ist für das Verfahren und die Herstellungsvorrichtung bevorzugt, dass die Folie eine strukturierte Oberfläche hat, so dass die Linse mit einer diffraktiven Struktur herstellbar ist. Mittels der diffraktiven Struktur ist es möglich, dass die Linse eine Mehrzahl von verschiedenen Brennpunkten aufweist und insbesondere drei verschiedene Brennpunkte aufweist.

Die Folie kann beispielsweise Polyvinylidenfluorid - Trifluoroethylen aufweisen oder im Wesentlichen daraus bestehen. Dadurch hat die Folie einen hohen dielektrischen Koeffizienten und zudem kann die Linse leicht von der Folie entfernt werden. Die Folie kann beispielsweise hergestellt werden, indem eine Suspension mit Polyvinylidenfluorid - Trifluoroethylen Pulver (beispielsweise käuflich erwerblich von Solvay Specialty Polymers Italy S.p.A) in einem Lösungsmittel, wie beispielsweise Cyclopentanon, hergestellt wird und diese Suspension mittels eines Tintenstrahldruckers gedruckt wird. Anschließend kann die Suspension mit Wärme behandelt werden.

Die Folie kann beispielsweise eine Dicke von 50 µm bis 200 µm haben.

Die Linse kann beispielsweise Polyacrylat, Polymethacrylat, Polyacrylamid und/oder Silikon aufweisen oder im Wesentlichen aus Polyacrylat, Polymethacrylat, Polyacrylamid und/oder Silikon bestehen.

Es ist bevorzugt, dass die Folie der Herstellungsvorrichtung eine Änderung der Krümmung während des Aushärteprozesses der Flüssigkeit ermöglicht. Einem potenziell auftretenden Volumenschrumpf beim Übergang von der Flüssigkeitsphase zur Festkörperphase in Form einer Linse kann somit aktiv entgegengewirkt und eine Linse mit einer hohen Oberflächenqualität erzielt werden.

Die erste Werkzeughälfte und die zweite Werkzeughälfte können eingerichtet sein, eine Mehrzahl der Linsen gleichzeitig herzustellen. Dadurch können die Linsen vorteilhaft kostengünstig hergestellt werden.

Im Folgenden wird anhand der beigefügten schematischen Zeichnungen die Erfindung näher erläutert.

Figuren 1 bis 3 zeigen einen Schnitt durch ein erstes Ausführungsbeispiel einer erfindungsgemäßen Herstellungsvorrichtung zu drei verschiedenen Zeitpunkten.

Figuren 4 und 5 zeigen eine Draufsicht auf einen Teil der Herstellungsvorrichtung gemäß Figuren 1 bis 3, wobei Figur 4 eine erste Belegung der Elektroden und Figur 5 eine zweite Belegung der Elektroden zeigt.

Figuren 6 und 7 zeigen einen Schnitt durch ein zweites Ausführungsbeispiel und ein drittes Ausführungsbeispiel der Herstellungsvorrichtung, wobei Figur 6 die Herstellungsvorrichtung zu einem ersten Zeitpunkt zeigt und Figur 7 die Herstellungsvorrichtung zu einem zweiten Zeitpunkt zeigt.

Figuren 8 und 9 zeigen einen Schnitt durch ein viertes Ausführungsbeispiel, wobei Figur 8 die Herstellungsvorrichtung zu einem ersten Zeitpunkt zeigt und Figur 9 die Herstellungsvorrichtung zu einem zweiten Zeitpunkt zeigt.

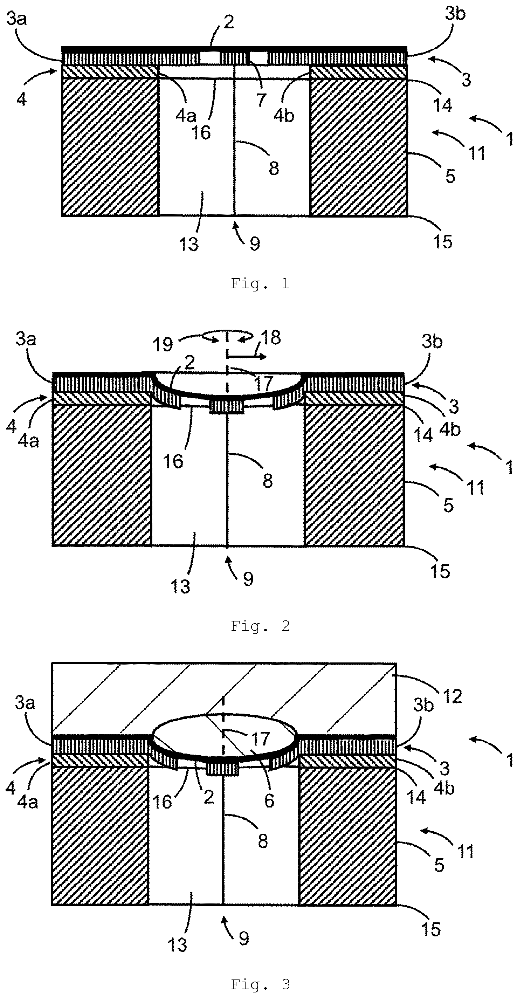

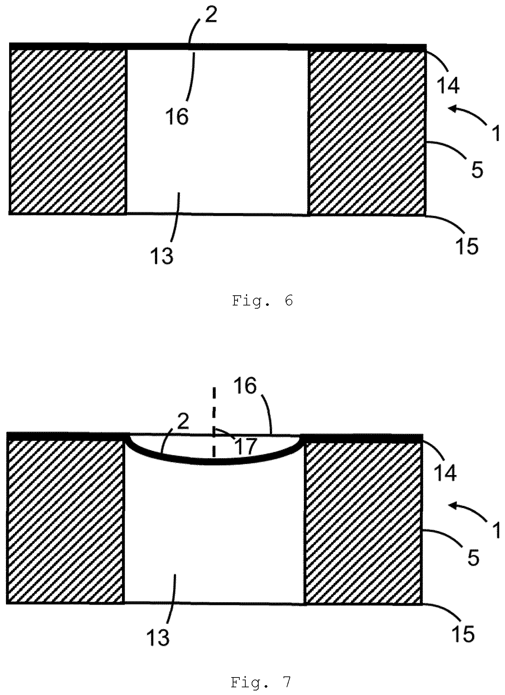

Wie es aus Figuren 1 bis 3 und 6 bis 9 ersichtlich ist, werden in einem Verfahren zum Herstellen einer ophthalmischen Linse 6 in einem Schritt a) für die Herstellungsvorrichtung 1 eine erste Werkzeughälfte 11, die einen Stützkörper 5, der einen Innenraum 13 und ein erstes Ende 14 aufweist, in das eine Öffnung 16 eingebracht ist, die mit dem Innenraum 13 kommuniziert, und eine Folie 2 aufweist, die direkt an dem ersten Ende 14 (vergleiche Figuren 6 bis 9) oder mittels mindestens einem Zwischenelement an dem ersten Ende 14 (vergleiche Figuren 1 bis 3) angeordnet ist und die Öffnung 16 abdeckt, und eine zweite Werkzeughälfte 12 bereitgestellt. Figuren 1, 6 und 8 zeigen, dass zu dem ersten Zeitpunkt in einem Schritt b) die erste Werkzeughälfte 11 und die zweite Werkzeughälfte 12 in einen Beabstandungszustand gebracht werden, in dem die erste Werkzeughälfte 11 und die zweite Werkzeughälfte 12 beabstandet voneinander angeordnet sind. Zu einem zweiten Zeitpunkt, vergleiche Figuren 2, 7 und 9, wird in einem Schritt c) die Krümmung der Folie 2 geändert. Anschließend wird in einem Schritt d) eine aushärtbare Flüssigkeit auf die Folie 2 aufgebracht. Danach werden in einem Schritt e) die erste Werkzeughälfte 11 und die zweite Werkzeughälfte 12 in einen Annäherungszustand gebracht (siehe Figur 3), in dem die erste Werkzeughälfte 11 und die zweite Werkzeughälfte 12 zusammengebracht sind, so dass die Flüssigkeit sowohl von der ersten Werkzeughälfte 11 als auch von der zweiten Werkzeughälfte 12 begrenzt ist. In einem Schritt f) wird die Flüssigkeit ausgehärtet, wodurch die Linse 6 hergestellt wird.

In Schritt c) kann die Folie 2 beispielsweise ausgehend von einer flachen Form (vergleiche Figuren 1, 6 und 8), die einer Krümmung von Null entspricht, zu einer gekrümmten Form (vergleiche Figuren 2, 3, 7 und 8) geändert werden.

Beispielsweise kann die Folie 2 vor dem Schritt c) vollständig außerhalb des Innenraums 13 angeordnet sein und in Schritt c) in den Innenraum 13 hinein gekrümmt werden.

Figur 3 zeigt, dass die zweite Werkzeughälfte 12 eine Mulde aufweisen kann, in der nach dem Schritt e) die Flüssigkeit angeordnet ist. Dadurch kann die Linse 6 bikonvex gebildet werden. Alternativ ist denkbar, dass die der Flüssigkeit zugewandte Seite der zweiten Werkzeughälfte 12 flach ist. Dadurch kann die Linse 6 plankonvex gebildet werden. Alternativ kann die zweite Werkzeughälfte 12 einen weiteren Stützkörper, der einen Innenraum und ein erstes Ende aufweist, in das eine Öffnung eingebracht ist, die mit dem Innenraum kommuniziert, und eine weitere Folie aufweisen, die direkt oder mittels mindestens einem Zwischenelement an dem ersten Ende angeordnet ist und die Öffnung abdeckt, wobei in Schritt c) auch die weitere Folie gekrümmt wird. Dadurch kann die Krümmung von zwei Flächen der Linse variabel eingestellt werden.

Gemäß dem ersten Ausführungsbeispiel gemäß Figuren 1 bis 5 ist die Folie 2 dielektrisch und in Schritt c) wird die Krümmung geändert, indem die Folie mit einem elektrischen Feld beaufschlagt wird. Dazu kann die erste Werkzeughälfte 11 eine Mehrzahl an kreissektorförmigen Elektroden 3a bis 3h, die auf der Folie 2 aufgebracht sind, und einen Gegenpol 9 aufweisen, der in der Mitte zwischen den kreissektorförmigen Elektroden 3a bis 3h vorgesehen ist, wobei in Schritt c) das elektrische Feld erzeugt wird, indem eine Spannungsdifferenz zwischen jedem der kreissektorförmigen Elektroden 3a bis 3h und dem Gegenpol 9 angelegt wird. Wie es aus Figuren 1 bis 3 ersichtlich ist, können die Elektroden 3a bis 3h auf der dem Stützkörper 5 zugewandten Seite der Folie 2 angeordnet sein. Die erste Werkzeughälfte 11 kann eine Zwischenlage 4 aufweisen, die elektrisch isolierend ist und zwischen dem Stützkörper 5 und den Elektroden 3a bis 3h angeordnet ist, so dass kein Strom von den Elektroden 3a bis 3h zu dem Stützkörper 5 fließen kann. Die Zwischenlage 4 kann einstückig oder mit mehreren Teilstücken 4a, 4b ausgebildet sein. Dabei kann für jede der Elektroden 3a bis 3h jeweils eines der Teilstücke 4a, 4b vorgesehen sein. Die Zwischenelemente sind die Zwischenlage 4 und/oder die Elektroden 3a bis 3h.

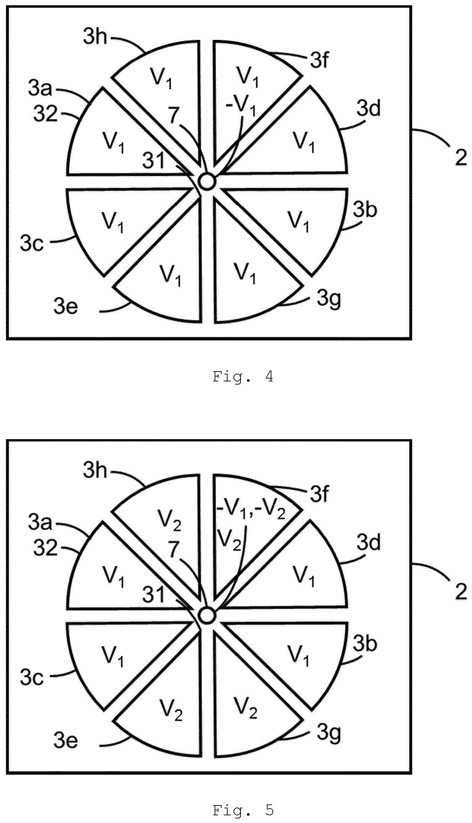

Figuren 4 und 5 zeigen, dass die Elektroden 3a bis 3h vollständig beabstandet zueinander angeordnet sein können. Die Elektroden 3a bis 3h können punktsymmetrisch zueinander angeordnet sein, wobei der Mittelpunkt 31 jeder der kreissektorförmigen Elektroden 3a bis 3h innen und der Kreisbogen 32 jeder der kreissektorförmigen Elektroden 3a bis 3h außen angeordnet ist. Der Gegenpol 9 kann eine Gegenelektrode 7 aufweisen, die in einem Bereich angeordnet ist, welcher von den Elektroden 3a bis 3h umgeben ist, insbesondere sternförmig umgeben ist. Zudem kann der Gegenpol 9 einen elektrischen Leiter 8 aufweisen, der elektrisch leitfähig an die Gegenelektrode 7 angeschlossen ist, und sich in dem Innenraum 13 erstreckt.

Die Folie 2 kann beispielsweise Polyvinylidenfluorid - Trifluoroethylen aufweisen oder im Wesentlichen daraus bestehen. Die Folie 2 kann beispielsweise hergestellt werden, indem eine Suspension mit Polyvinylidenfluorid - Trifluoroethylen Pulver (beispielsweise käuflich erwerblich von Solvay Specialty Polymers Italy S.p.A) in einem Lösungsmittel, wie beispielsweise Cyclopentanon, hergestellt wird und diese Suspension mittels eines Tintenstrahldruckers gedruckt wird. Anschließend kann die Suspension mit Wärme behandelt werden. Analog können die Elektroden 3a bis 3h und die Gegenelektrode 7 hergestellt werden, indem eine Suspension von metallischen Partikeln in einem Lösungsmittels mittels eines Tintenstrahldruckers gedruckt wird. Durch eine Wärmebehandlung kann das Lösungsmittel entfernt werden.

In Figur 4 ist dargestellt, dass alle Elektroden 3a bis 3h mit einer Spannung V₁ beaufschlagt sein können, wobei die Gegenelektrode 7 mit der Spannung -V₁ beaufschlagt ist. Dadurch kann die Linse 6 achsensymmetrisch um ihre optische Achse 17 hergestellt werden. Die Linse 6 kann beispielsweise sphärisch hergestellt werden. Wenn die Dicke der Folie 2 in Radialrichtung 18 (siehe Figur 2) bezüglich der optischen Achse 17 variiert, kann die Linse 6 asphärisch hergestellt werden.

Eine Alternative dazu ist in Figur 5 dargestellt, wonach die kreissektorförmigen Elektroden 3a bis 3h eine erste Gruppe 3a bis 3d der Elektroden und eine zweite Gruppe 3e bis 3g der Elektroden aufweisen können, wobei in Schritt c) die erste Gruppe 3a bis 3d mit einer ersten Spannung V₁ beaufschlagt wird und die zweite Gruppe 3e bis 3h mit einer zweiten Spannung V₂ beaufschlagt wird, die verschieden von der ersten Spannung V₁ ist. Für beide Gruppen 3a bis 3d und 3e bis 3h ist der Gegenpol der Gegenpol 9, so dass der Gegenpol 9 sowohl mit der Spannung -V₁ als auch mit der Spannung -V₂ beaufschlagt ist. Damit ist es möglich, die Linse 6 mit einer torischen Form herzustellen. Beispielsweise kann die erste Gruppe 3a bis 3d achsensymmetrisch bezüglich einer parallel zu einer Zylinderachse der Linse 6 angeordneten Achse angeordnet sein. Die zweite Gruppe 3e bis 3h kann von den verbliebenen Elektroden gebildet sein.

Gemäß der zweiten Ausführungsform, die in Figuren 6 und 7 dargestellt ist, kann die Folie 2 paramagnetisch, diamagnetisch und/oder ferromagnetisch sein, beispielsweise indem sie Metallstreifen aufweist und/oder paramagnetische, diamagnetische und/oder ferromagnetische Partikel aufweist, und in Schritt c) kann die Krümmung geändert werden, indem die Folie 2 mit einem Magnetfeld (nicht in Figuren 6 und 7 dargestellt) beaufschlagt wird. In Schritt c) kann die Folie 2 mit einem in Radialrichtung 18 bezüglich der optischen Achse 17 der Linse 6 und/oder in Umfangsrichtung 19 bezüglich der optischen Achse 17 der Linse 6 variierendem Magnetfeld beaufschlagt werden, wobei die Radialrichtung 18 und die Umfangsrichtung 19 in Figur 2 dargestellt sind.

Gemäß der dritten Ausführungsform, die nicht zur Erfindung gehört und in Figuren 6 und 7 dargestellt ist, kann die Folie 2 den Innenraum 13 gasdicht von der dem Innenraum 13 abgewandten Seite der Folie 2 abdichten und in Schritt c) kann die Krümmung geändert werden, indem der Druck in dem Innenraum 13 verschieden eingestellt wird von dem Druck auf der dem Innenraum 13 abgewandten Seite der Folie 2. Dazu kann ein zweites Ende 15 des Stützkörpers 5, das dem ersten Ende 14 abgewandt angeordnet ist, offen ausgebildet sein und es kann via das zweite Ende 15 Gas aus dem Innenraum 13 abgesaugt werden. Alternativ ist es denkbar, dass die Öffnung 16 die einzige mit dem Innenraum 13 kommunizierende Öffnung ist und dass die dem Innenraum 13 abgewandte Seite der Folie 2 mit Druck beaufschlag wird.

Die Dicke der Folie 2 kann in Radialrichtung 18 bezüglich der optischen Achse 17 der Linse 6 und/oder in Umfangsrichtung 19 bezüglich der optischen Achse 17 der Linse 6 variieren, wobei die Radialrichtung 18 und die Umfangsrichtung 19 in Figur 2 dargestellt sind.

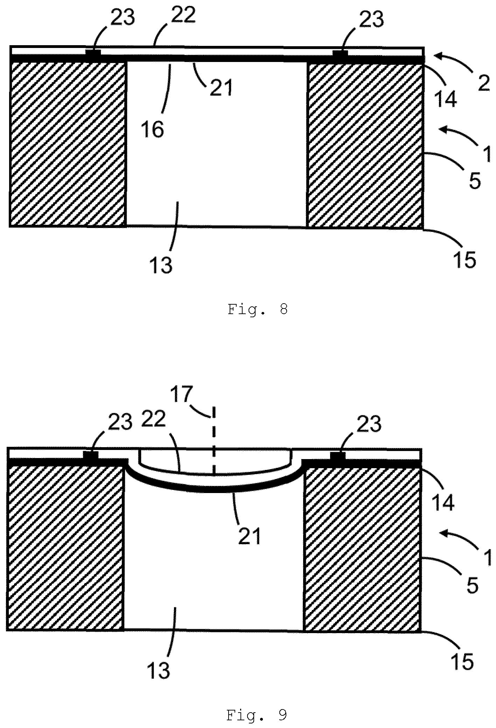

Bei der in Figuren 8 und 9 dargestellten vierten Ausführungsform weist die Folie 2 ein Bimetall auf und in Schritt c) wird die Krümmung geändert, indem die Temperatur der Folie 2 erhöht oder erniedrigt wird. Figuren 8 und 9 zeigen, dass das Bimetall ein erstes Metall 21 und ein zweites Metall 22 aufweist. Das erste Metall 21 und das zweite Metall 22 können entlang einer kreisförmigen oder ellipsenförmigen Linie 23 aneinander befestigt sein. In dem Fall, dass das erste Metall 21 einen höheren Wärmeausdehnungskoeffizienten als das zweite Metall 22 hat, ist es erforderlich, das Bimetall zu erwärmen, um ausgehend von der Krümmung in Figur 8 die Krümmung in Figur 9 zu erreichen. In dem Fall, dass das erste Metall 21 einen niedrigeren Wärmeausdehnungskoeffizienten als das zweite Metall 22 hat, ist es erforderlich, das Bimetall abzukühlen, um ausgehend von der Krümmung in Figur 8 die Krümmung in Figur 9 zu erreichen.

### Bezugszeichenliste

1 Herstellungsvorrichtung
2 Folie
3a Elektrode
3b Elektrode
3c Elektrode
3d Elektrode
3e Elektrode
3f Elektrode
3g Elektrode
3h Elektrode
4 Zwischenlage
4a Teilstück
4b Teilstück
5 Stützkörper
6 ophthalmische Linse
7 Gegenelektrode
8 elektrischer Leiter
9 Gegenpol
11 erste Werkzeughälfte
12 zweite Werkzeughälfte
13 Innenraum
14 erstes Ende
15 zweites Ende
16 Öffnung
17 optische Achse
18 Radialrichtung
19 Umfangsrichtung
21 erstes Metall
22 zweites Metall
23 kreisförmige oder ellipsenförmigen Linie
31 Mittelpunkt
32 Kreisbogen

## Patentansprüche

1. Verfahren zum Herstellen einer ophthalmischen Linse (6), mit den Schritten:
a) Bereitstellen einer ersten Werkzeughälfte (11), die einen Stützkörper (5), der einen Innenraum (13) und ein erstes Ende (14) aufweist, in das eine Öffnung (16) eingebracht ist, die mit dem Innenraum (13) kommuniziert, und eine Folie (2) aufweist, die direkt oder mittels mindestens einem Zwischenelement an dem ersten Ende (14) angeordnet ist und die Öffnung (16) abdeckt, und einer zweiten Werkzeughälfte (12), wobei die Folie (2) dielektrisch ist;
b) Bringen der ersten Werkzeughälfte (11) und der zweiten Werkzeughälfte (12) in einen Beabstandungszustand, in dem die erste Werkzeughälfte (11) und die zweite Werkzeughälfte (12) beabstandet voneinander angeordnet sind;
c) Ändern der Krümmung der Folie (2), indem die Folie (2) mit einem elektrischen Feld beaufschlagt wird;
d) Aufbringen einer aushärtbaren Flüssigkeit auf die Folie (2);
e) Bringen der ersten Werkzeughälfte (11) und der zweiten Werkzeughälfte (12) in einen Annäherungszustand, in dem die erste Werkzeughälfte (11) und die zweite Werkzeughälfte (12) zusammengebracht sind, so dass die Flüssigkeit sowohl von der ersten Werkzeughälfte (11) als auch von der zweiten Werkzeughälfte (12) begrenzt ist;
f) Aushärten der Flüssigkeit, wodurch die Linse (6) hergestellt wird.

2. Verfahren gemäß Anspruch 1, wobei die erste Werkzeughälfte (11) eine Mehrzahl an kreissektorförmigen Elektroden (3a bis 3h), die auf der Folie (2) aufgebracht sind, und einen Gegenpol (9) aufweist, der in der Mitte zwischen den kreissektorförmigen Elektroden (3a bis 3h) vorgesehen ist, wobei in Schritt c) das elektrische Feld erzeugt wird, indem eine Spannungsdifferenz zwischen jedem der kreissektorförmigen Elektroden (3a bis 3h) und dem Gegenpol (9) angelegt wird.

3. Verfahren gemäß Anspruch 2, wobei die kreissektorförmigen Elektroden (3a bis 3h) eine erste Gruppe (3a bis 3d) der Elektroden und eine zweite Gruppe (3e bis 3h) der Elektroden aufweisen, wobei in Schritt c) die erste Gruppe mit einer ersten Spannung (V₁) beaufschlagt wird und die zweite Gruppe mit einer zweiten Spannung (V₂) beaufschlagt wird, die verschieden von der ersten Spannung (V₁) ist.

4. Verfahren zum Herstellen einer ophthalmischen Linse (6), mit den Schritten:
a) Bereitstellen einer ersten Werkzeughälfte (11), die einen Stützkörper (5), der einen Innenraum (13) und ein erstes Ende (14) aufweist, in das eine Öffnung (16) eingebracht ist, die mit dem Innenraum (13) kommuniziert, und eine Folie (2) aufweist, die direkt oder mittels mindestens einem Zwischenelement an dem ersten Ende (14) angeordnet ist und die Öffnung (16) abdeckt, und einer zweiten Werkzeughälfte (12), wobei die Folie (2) paramagnetisch, diamagnetisch und/oder ferromagnetisch ist;
b) Bringen der ersten Werkzeughälfte (11) und der zweiten Werkzeughälfte (12) in einen Beabstandungszustand, in dem die erste Werkzeughälfte (11) und die zweite Werkzeughälfte (12) beabstandet voneinander angeordnet sind;
c) Ändern der Krümmung der Folie (2), indem die Folie (2) mit einem Magnetfeld beaufschlagt wird;
d) Aufbringen einer aushärtbaren Flüssigkeit auf die Folie (2);
e) Bringen der ersten Werkzeughälfte (11) und der zweiten Werkzeughälfte (12) in einen Annäherungszustand, in dem die erste Werkzeughälfte (11) und die zweite Werkzeughälfte (12) zusammengebracht sind, so dass die Flüssigkeit sowohl von der ersten Werkzeughälfte (11) als auch von der zweiten Werkzeughälfte (12) begrenzt ist;
f) Aushärten der Flüssigkeit, wodurch die Linse (6) hergestellt wird.

5. Verfahren gemäß Anspruch 4, wobei in Schritt c) die Folie (2) mit einem in Radialrichtung (18) bezüglich der optischen Achse (17) der Linse (6) und/oder in Umfangsrichtung (19) bezüglich der optischen Achse (17) der Linse (6) variierendem Magnetfeld beaufschlagt wird.

6. Verfahren zum Herstellen einer ophthalmischen Linse (6), mit den Schritten:
a) Bereitstellen einer ersten Werkzeughälfte (11), die einen Stützkörper (5), der einen Innenraum (13) und ein erstes Ende (14) aufweist, in das eine Öffnung (16) eingebracht ist, die mit dem Innenraum (13) kommuniziert, und eine Folie (2) aufweist, die direkt oder mittels mindestens einem Zwischenelement an dem ersten Ende (14) angeordnet ist und die Öffnung (16) abdeckt, und einer zweiten Werkzeughälfte (12), wobei die Folie (2) ein Bimetall oder ein Polymer-Komposit aufweist;
b) Bringen der ersten Werkzeughälfte (11) und der zweiten Werkzeughälfte (12) in einen Beabstandungszustand, in dem die erste Werkzeughälfte (11) und die zweite Werkzeughälfte (12) beabstandet voneinander angeordnet sind;
c) Ändern der Krümmung der Folie (2), indem die Temperatur der Folie (2) erhöht oder erniedrigt wird;
d) Aufbringen einer aushärtbaren Flüssigkeit auf die Folie (2);
e) Bringen der ersten Werkzeughälfte (11) und der zweiten Werkzeughälfte (12) in einen Annäherungszustand, in dem die erste Werkzeughälfte (11) und die zweite Werkzeughälfte (12) zusammengebracht sind, so dass die Flüssigkeit sowohl von der ersten Werkzeughälfte (11) als auch von der zweiten Werkzeughälfte (12) begrenzt ist;
f) Aushärten der Flüssigkeit, wodurch die Linse (6) hergestellt wird.

7. Herstellungsvorrichtung für die Herstellung einer ophthalmischen Linse (6), mit einer ersten Werkzeughälfte (11), die einen Stützkörper (5), der einen Innenraum (13) und ein erstes Ende (14) aufweist, in das eine Öffnung (16) eingebracht ist, die mit dem Innenraum (13) kommuniziert, und eine Folie (2) aufweist, die direkt oder mittels mindestens einem Zwischenelement an dem ersten Ende (14) angeordnet ist und die Öffnung (16) abdeckt, einer zweiten Werkzeughälfte (12) und einer Krümmungseinrichtung, die eingerichtet ist, die Krümmung der Folie (2) zu ändern, wobei die erste Werkzeughälfte (11) und die zweite Werkzeughälfte (12) eingerichtet sind, in einen Beabstandungszustand, in dem die erste Werkzeughälfte (11) und die zweite Werkzeughälfte (12) beabstandet voneinander angeordnet sind, und in einen Annäherungszustand gebracht zu werden, in dem die erste Werkzeughälfte (11) und die zweite Werkzeughälfte (12) zusammengebracht sind und in dem die erste Werkzeughälfte (11) und die zweite Werkzeughälfte (12) einen Hohlraum begrenzen, der die Form der Linse (6) hat und in dem eine aushärtbare Flüssigkeit einbringbar ist, die nach ihrem Aushärten die Linse (6) bildet, **dadurch gekennzeichnet, dass** die Folie (2) dielektrisch ist und die Krümmungseinrichtung eingerichtet ist, die Folie (2) mit einem elektrischen Feld zu beaufschlagen.

8. Herstellungsvorrichtung für die Herstellung einer ophthalmischen Linse (6), mit einer ersten Werkzeughälfte (11), die einen Stützkörper (5), der einen Innenraum (13) und ein erstes Ende (14) aufweist, in das eine Öffnung (16) eingebracht ist, die mit dem Innenraum (13) kommuniziert, und eine Folie (2) aufweist, die direkt oder mittels mindestens einem Zwischenelement an dem ersten Ende (14) angeordnet ist und die Öffnung (16) abdeckt, einer zweiten Werkzeughälfte (12) und einer Krümmungseinrichtung, die eingerichtet ist, die Krümmung der Folie (2) zu ändern, wobei die erste Werkzeughälfte (11) und die zweite Werkzeughälfte (12) eingerichtet sind, in einen Beabstandungszustand, in dem die erste Werkzeughälfte (11) und die zweite Werkzeughälfte (12) beabstandet voneinander angeordnet sind, und in einen Annäherungszustand gebracht zu werden, in dem die erste Werkzeughälfte (11) und die zweite Werkzeughälfte (12) zusammengebracht sind und in dem die erste Werkzeughälfte (11) und die zweite Werkzeughälfte (12) einen Hohlraum begrenzen, der die Form der Linse (6) hat und in dem eine aushärtbare Flüssigkeit einbringbar ist, die nach ihrem Aushärten die Linse (6) bildet, **dadurch gekennzeichnet, dass** die Folie (2) paramagnetisch, diamagnetisch und/oder ferromagnetisch ist und die Krümmungseinrichtung eingerichtet ist, die Folie mit (2) einem Magnetfeld zu beaufschlagen.

9. Herstellungsvorrichtung für die Herstellung einer ophthalmischen Linse (6), mit einer ersten Werkzeughälfte (11), die einen Stützkörper (5), der einen Innenraum (13) und ein erstes Ende (14) aufweist, in das eine Öffnung (16) eingebracht ist, die mit dem Innenraum (13) kommuniziert, und eine Folie (2) aufweist, die direkt oder mittels mindestens einem Zwischenelement an dem ersten Ende (14) angeordnet ist und die Öffnung (16) abdeckt, einer zweiten Werkzeughälfte (12) und einer Krümmungseinrichtung, die eingerichtet ist, die Krümmung der Folie (2) zu ändern, wobei die erste Werkzeughälfte (11) und die zweite Werkzeughälfte (12) eingerichtet sind, in einen Beabstandungszustand, in dem die erste Werkzeughälfte (11) und die zweite Werkzeughälfte (12) beabstandet voneinander angeordnet sind, und in einen Annäherungszustand gebracht zu werden, in dem die erste Werkzeughälfte (11) und die zweite Werkzeughälfte (12) zusammengebracht sind und in dem die erste Werkzeughälfte (11) und die zweite Werkzeughälfte (12) einen Hohlraum begrenzen, der die Form der Linse (6) hat und in dem eine aushärtbare Flüssigkeit einbringbar ist, die nach ihrem Aushärten die Linse (6) bildet, **dadurch gekennzeichnet, dass** die Folie (2) ein Bimetall oder ein Polymer-Komposit aufweist und die Krümmungseinrichtung eingerichtet ist, die Temperatur der Folie (2) zu erhöhen und/oder zu erniedrigen.

## Claims

1. Method for producing an ophthalmic lens (6), comprising the steps of:
a) providing a first mould half (11), which has a support body (5) having an interior space (13) and having a first end (14) in which there is formed an opening (16) which communicates with the interior space (13), and has a film (2) arranged directly or by means of at least one intermediate element on the first end (14) and covering the opening (16), and a second mould half (12), wherein the film (2) is dielectric;
b) bringing the first mould half (11) and the second mould half (12) into a spacing state, in which the first mould half (11) and the second mould half (12) are arranged spaced apart from one another;
c) changing the curvature of the film (2) by exposing the film (2) to an electric field;
d) applying a curable liquid to the film (2);
e) bringing the first mould half (11) and the second mould half (12) into a proximity state, in which the first mould half (11) and the second mould half (12) are brought together so that the liquid is delimited by both the first mould half (11) and the second mould half (12);
f) curing the liquid, thereby producing the lens (6).

2. Method according to Claim 1, wherein the first mould half (11) has a plurality of circular-sector-shaped electrodes (3a to 3h), which are applied to the film (2), and an opposite pole (9), which is provided in the centre between the circular-sector-shaped electrodes (3a to 3h), wherein, in step c), the electric field is generated in that a potential difference is applied between each of the circular-sector-shaped electrodes (3a to 3h) and the opposite pole (9).

3. Method according to Claim 2, wherein the circular-sector-shaped electrodes (3a to 3h) comprise a first group (3a to 3d) of the electrodes and a second group (3e to 3h) of the electrodes, wherein, in step c), a first voltage (V₁) is applied to the first group and a second voltage (V₂), different from the first voltage (V₁), is applied to the second group.

4. Method for producing an ophthalmic lens (6), comprising the steps of:
a) providing a first mould half (11), which has a support body (5) having an interior space (13) and having a first end (14) in which there is formed an opening (16) which communicates with the interior space (13), and has a film (2) arranged directly or by means of at least one intermediate element on the first end (14) and covering the opening (16), and a second mould half (12), wherein the film (2) is paramagnetic, diamagnetic and/or ferromagnetic;
b) bringing the first mould half (11) and the second mould half (12) into a spacing state, in which the first mould half (11) and the second mould half (12) are arranged spaced apart from one another;
c) changing the curvature of the film (2) by exposing the film (2) to a magnetic field;
d) applying a curable liquid to the film (2);
e) bringing the first mould half (11) and the second mould half (12) into a proximity state, in which the first mould half (11) and the second mould half (12) are brought together so that the liquid is delimited by both the first mould half (11) and the second mould half (12);
f) curing the liquid, thereby producing the lens (6).

5. Method according to Claim 4, wherein, in step c), the film (2) is exposed to a magnetic field which varies in a radial direction (18) in relation to the optical axis (17) of the lens (6) and/or in a peripheral direction (19) in relation to the optical axis (17) of the lens (6).

6. Method for producing an ophthalmic lens (6), comprising the steps of:
a) providing a first mould half (11), which has a support body (5) having an interior space (13) and having a first end (14) in which there is formed an opening (16) which communicates with the interior space (13), and has a film (2) arranged directly or by means of at least one intermediate element on the first end (14) and covering the opening (16), and a second mould half (12), wherein the film (2) comprises a bimetal or a polymer composite;
b) bringing the first mould half (11) and the second mould half (12) into a spacing state, in which the first mould half (11) and the second mould half (12) are arranged spaced apart from one another;
c) changing the curvature of the film (2) by increasing or decreasing the temperature of the film (2);
d) applying a curable liquid to the film (2);
e) bringing the first mould half (11) and the second mould half (12) into a proximity state, in which the first mould half (11) and the second mould half (12) are brought together so that the liquid is delimited by both the first mould half (11) and the second mould half (12);
f) curing the liquid, thereby producing the lens (6).

7. Production apparatus for producing an ophthalmic lens (6), having a first mould half (11), which has a support body (5) having an interior space (13) and having a first end (14) in which there is formed an opening (16) which communicates with the interior space (13), and has a film (2) arranged directly or by means of at least one intermediate element on the first end (14) and covering the opening (16), having a second mould half (12) and having a curvature device, which is configured to change the curvature of the film (2), wherein the first mould half (11) and the second mould half (12) are configured to be brought into a spacing state, in which the first mould half (11) and the second mould half (12) are arranged spaced apart from one another, and into a proximity state, in which the first mould half (11) and the second mould half (12) are brought together and in which the first mould half (11) and the second mould half (12) delimit a cavity having the shape of the lens (6), into which cavity introduction of a curable liquid which, after curing, forms the lens (6) is possible, **characterized in that** the film (2) is dielectric, and the curvature device is configured to expose the film (2) to an electric field.

8. Production apparatus for producing an ophthalmic lens (6), having a first mould half (11), which has a support body (5) having an interior space (13) and having a first end (14) in which there is formed an opening (16) which communicates with the interior space (13), and has a film (2) arranged directly or by means of at least one intermediate element on the first end (14) and covering the opening (16), having a second mould half (12) and having a curvature device, which is configured to change the curvature of the film (2), wherein the first mould half (11) and the second mould half (12) are configured to be brought into a spacing state, in which the first mould half (11) and the second mould half (12) are arranged spaced apart from one another, and into a proximity state, in which the first mould half (11) and the second mould half (12) are brought together and in which the first mould half (11) and the second mould half (12) delimit a cavity having the shape of the lens (6), into which cavity introduction of a curable liquid which, after curing, forms the lens (6) is possible, **characterized in that** the film (2) is paramagnetic, diamagnetic and/or ferromagnetic, and the curvature device is configured to expose the film (2) to a magnetic field.

9. Production apparatus for producing an ophthalmic lens (6), having a first mould half (11), which has a support body (5) having an interior space (13) and having a first end (14) in which there is formed an opening (16) which communicates with the interior space (13), and has a film (2) arranged directly or by means of at least one intermediate element on the first end (14) and covering the opening (16), having a second mould half (12) and having a curvature device, which is configured to change the curvature of the film (2), wherein the first mould half (11) and the second mould half (12) are configured to be brought into a spacing state, in which the first mould half (11) and the second mould half (12) are arranged spaced apart from one another, and into a proximity state, in which the first mould half (11) and the second mould half (12) are brought together and in which the first mould half (11) and the second mould half (12) delimit a cavity having the shape of the lens (6), into which cavity introduction of a curable liquid which, after curing, forms the lens (6) is possible, **characterized in that** the film (2) comprises a bimetal or a polymer composite, and the curvature device is configured to increase and/or to decrease the temperature of the film (2).

## Revendications

1. Procédé de fabrication d'une lentille ophtalmique (6), comprenant les étapes suivantes :
a) fournir une première moitié de moule (11) comprenant un corps de support (5) ayant un espace intérieur (13) et une première extrémité (14) dans laquelle est pratiquée une ouverture (16) communiquant avec l'espace intérieur (13), et un film (2) disposé directement ou au moyen d'au moins un élément intermédiaire sur la première extrémité (14) et recouvrant l'ouverture (16), et une deuxième moitié de moule (12), le film (2) étant diélectrique ;
b) amener la première moitié de moule (11) et la deuxième moitié de moule (12) dans un état d'espacement dans lequel la première moitié de moule (11) et la deuxième moitié de moule (12) sont placées à distance l'une de l'autre ;
c) modifier la courbure du film (2) en appliquant un champ électrique au film (2) ;
d) appliquer un liquide durcissable sur le film (2) ;
e) amener la première moitié de moule (11) et la deuxième moitié de moule (12) dans un état de proximité dans lequel la première moitié de moule (11) et la deuxième moitié de moule (12) sont réunies, de sorte que le liquide est confiné à la fois par la première moitié de moule (11) et par la deuxième moitié de moule (12) ;
f) réaliser le durcissement du liquide, ce qui permet de fabriquer la lentille (6).

2. Procédé selon la revendication 1, dans lequel la première moitié de moule (11) comprend une pluralité d'électrodes (3a à 3h) en forme de secteurs de cercle appliquées sur le film (2) et un pôle opposé (9), prévu à mi-chemin entre les électrodes (3a à 3h) en forme de secteurs de cercle, dans lequel, à l'étape c), le champ électrique est généré en appliquant une différence de tension entre chacune des électrodes (3a à 3h) en forme de secteurs de cercle et le pôle opposé (9).

3. Procédé selon la revendication 2, dans lequel les électrodes (3a à 3h) en forme de secteurs de cercle comprennent un premier groupe (3a à 3d) d'électrodes et un deuxième groupe (3e à 3h) d'électrodes, dans lequel, à l'étape c), le premier groupe est soumis à une première tension (V₁) et le deuxième groupe est soumis à une deuxième tension (V₂) qui est différente de la première tension (V₁).

4. Procédé de fabrication d'une lentille ophtalmique (6), comprenant les étapes suivantes :
a) fournir une première moitié de moule (11) comprenant un corps de support (5) qui présente un espace intérieur (13) et une première extrémité (14) dans laquelle est pratiquée une ouverture (16) qui communique avec l'espace intérieur (13), et un film (2) qui est disposé directement ou au moyen d'au moins un élément intermédiaire sur la première extrémité (14) et qui recouvre l'ouverture (16), et une deuxième moitié de moule (12), le film (2) étant paramagnétique, diamagnétique et/ou ferromagnétique ;
b) amener la première moitié de moule (11) et la deuxième moitié de moule (12) dans un état d'espacement dans lequel la première moitié de moule (11) et la deuxième moitié de moule (12) sont placées à distance l'une de l'autre ;
c) modifier la courbure du film (2) en appliquant un champ magnétique au film (2) ;
d) appliquer un liquide durcissable sur le film (2) ;
e) amener la première moitié de moule (11) et la deuxième moitié de moule (12) dans un état de proximité dans lequel la première moitié de moule (11) et la deuxième moitié de moule (12) sont réunies de telle sorte que le liquide soit confiné à la fois par la première moitié de moule (11) et par la deuxième moitié de moule (12) ;
f) réaliser le durcissement du liquide, ce qui permet de fabriquer la lentille (6).

5. Procédé selon la revendication 4, dans lequel, à l'étape c), le film (2) est soumis à un champ magnétique variant dans la direction radiale (18) par rapport à l'axe optique (17) de la lentille (6) et/ou dans la direction circonférentielle (19) par rapport à l'axe optique (17) de la lentille (6).

6. Procédé de fabrication d'une lentille ophtalmique (6), comprenant les étapes suivantes :
a) fournir une première moitié de moule (11) comprenant un corps de support (5) qui présente un espace intérieur (13) et une première extrémité (14) dans laquelle est pratiquée une ouverture (16) qui communique avec l'espace intérieur (13), et un film (2) qui est disposé directement ou au moyen d'au moins un élément intermédiaire sur la première extrémité (14) et qui recouvre l'ouverture (16), et une deuxième moitié de moule (12), le film (2) comprenant un bimétal ou un composite polymère ;
b) amener la première moitié de moule (11) et la deuxième moitié de moule (12) dans un état d'espacement dans lequel la première moitié de moule (11) et la deuxième moitié de moule (12) sont placées à distance l'une de l'autre ;
c) modifier la courbure du film (2) en augmentant ou en diminuant la température du film (2) ;
d) appliquer un liquide durcissable sur le film (2) ;
e) amener la première moitié de moule (11) et la deuxième moitié de moule (12) dans un état de proximité dans lequel la première moitié de moule (11) et la deuxième moitié de moule (12) sont réunies, de sorte que le liquide est confiné à la fois par la première moitié de moule (11) et par la deuxième moitié de moule (12) ;
f) réaliser le durcissement du liquide, ce qui permet de fabriquer la lentille (6).

7. Dispositif de fabrication pour la fabrication d'une lentille ophtalmique (6), comprenant une première moitié de moule (11) qui présente un corps de support (5) ayant un espace intérieur (13) et une première extrémité (14) dans laquelle est pratiquée une ouverture (16) qui communique avec l'espace intérieur (13), et un film (2), qui est disposé directement ou au moyen d'au moins un élément intermédiaire sur la première extrémité (14) et qui recouvre l'ouverture (16), une deuxième moitié de moule (12) et un dispositif de courbure qui est conçu pour modifier la courbure du film (2), la première moitié de moule (11) et la deuxième moitié de moule (12) étant conçues pour passer dans un état d'espacement, dans lequel la première moitié de moule (11) et la deuxième moitié de moule (12) sont placées à distance l'une de l'autre, et dans un état de proximité dans lequel la première moitié de moule (11) et la deuxième moitié de moule (12) sont réunies et dans lequel la première moitié de moule (11) et la deuxième moitié de moule (12) délimitent une cavité, qui a la forme de la lentille (6) et dans laquelle est apte à être introduit un liquide durcissable qui, après son durcissement, forme la lentille (6), **caractérisé en ce que** le film (2) est diélectrique et le dispositif de courbure est conçu pour appliquer un champ électrique au film (2).

8. Dispositif de fabrication pour la fabrication d'une lentille ophtalmique (6), avec une première moitié de moule (11) qui présente un corps de support (5) qui présente un espace intérieur (13) et une première extrémité (14) dans laquelle est pratiquée une ouverture (16) qui communique avec l'espace intérieur (13), et un film (2), qui est disposé directement ou au moyen d'au moins un élément intermédiaire sur la première extrémité (14) et qui recouvre l'ouverture (16), une deuxième moitié de moule (12) et un dispositif de courbure qui est conçu pour modifier la courbure du film (2), la première moitié de moule (11) et la deuxième moitié de moule (12) étant conçues pour passer dans un état d'espacement, dans lequel la première moitié de moule (11) et la deuxième moitié de moule (12) sont placées à distance l'une de l'autre, et dans un état de proximité dans lequel la première moitié de moule (11) et la deuxième moitié de moule (12) sont réunies et dans lequel la première moitié de moule (11) et la deuxième moitié de moule (12) délimitent une cavité, qui a la forme de la lentille (6) et dans laquelle est apte à être introduit un liquide durcissable qui, après son durcissement, forme la lentille (6), **caractérisé en ce que** le film (2) est paramagnétique, diamagnétique et/ou ferromagnétique et **en ce que** le dispositif de courbure est conçu pour soumettre le film (2) à un champ magnétique.

9. Dispositif de fabrication pour la fabrication d'une lentille ophtalmique (6), avec une première moitié de moule (11) qui présente un corps de support (5) qui présente un espace intérieur (13) et une première extrémité (14) dans laquelle est pratiquée une ouverture (16) qui communique avec l'espace intérieur (13), et un film (2), qui est disposé directement ou au moyen d'au moins un élément intermédiaire sur la première extrémité (14) et qui recouvre l'ouverture (16), une deuxième moitié de moule (12) et un dispositif de courbure qui est conçu pour modifier la courbure du film (2), la première moitié de moule (11) et la deuxième moitié de moule (12) étant conçues pour passer dans un état d'espacement, dans lequel la première moitié de moule (11) et la deuxième moitié de moule (12) sont placées à distance l'une de l'autre, et dans un état de proximité dans lequel la première moitié de moule (11) et la deuxième moitié de moule (12) sont réunies et dans lequel la première moitié de moule (11) et la deuxième moitié de moule (12) délimitent une cavité, qui a la forme de la lentille (6) et dans laquelle est apte à être introduit un liquide durcissable qui, après son durcissement, forme la lentille (6), **caractérisé en ce que** le film (2) comporte un bimétal ou un composite polymère et le dispositif de courbure est conçu pour augmenter et/ou diminuer la température du film (2).
